# EUROPÄISCHE PATENTSCHRIFT

(11) **EP 3 578 048 B1**
(45) Veröffentlichungstag und Bekanntmachung des Hinweises auf die Patenterteilung: **06.10.2021**
(21) Anmeldenummer: 19176659.1
(22) Anmeldetag: 27.05.2019
(51) Int. Cl.: A21B 1/10, A21B 1/48

(54) **DURCHLAUF-BACKOFEN FÜR DEN KONTINUIERLICHEN BACKBETRIEB**
CIRCULATION OVEN FOR CONTINUOUS BAKING
FOUR À CUIRE À PASSAGE CONTINU POUR LE MODE DE CUISSON CONTINU

(30) Priorität: 06.06.2018 DE 102018208959
(43) Veröffentlichungstag der Anmeldung: 11.12.2019
(73) Patentinhaber: Werner & Pfleiderer Industrielle Backtechnik GmbH, 71732 Tamm (DE)
(72) Erfinder: Knost, Dieter, 91550 Dinkelsbühl (DE)
(74) Vertreter: Rau, Schneck & Hübner Patentanwälte Rechtsanwälte PartGmbB

(56) Entgegenhaltungen:
- EP-A2- 1 293 127
- DE-A1- 19 820 061
- DE-A1-102006 043 287
- DE-A1-102016 201 767
- US-A- 4 245 613
- US-A- 5 826 496
- US-A1- 2009 001 068
- US-A1- 2017 245 671

## Beschreibung

Die Erfindung betrifft einen Durchlauf-Backofen für den kontinuierlichen Backbetrieb.

Ein derartiger Durchlauf-Backofen ist bekannt aus der DE 1 095 223 A, der DE 26 29 716 A1 und der US 1,832,374. Die DE 198 20 061 A1 beschreibt einen Backofen mit mehreren hintereinander angeordneten Ofen-Modulen, die jeweils mehrere übereinander angeordnete Herde aufweisen. Die DE 10 2016 201 767 A1 offenbart einen modularen Durchlaufwagenofen. Die EP 1 293 127 A2 offenbart einen Ofen mit einem Wärmetauscher. Die US 5,826,496 beschreibt einen Ofen für Lebensmittelprodukte. Die US 2017/0245671 A1, die US 4,245,613 und die US 2009/0001068 A1 offenbaren doppelstöckige Öfen. Die DE 10 2006 043 287 A1 offenbart einen Etagenbackofen mit einem Ölkreislauf.

Es ist eine Aufgabe der vorliegenden Erfindung, einen Durchlauf-Backofen der eingangs genannten Art so weiterzubilden, dass er effizient und angepasst an unterschiedliche Durchsatzanforderungen betrieben werden kann. Diese Aufgabe ist erfindungsgemäß gelöst durch einen Durchlauf-Backofen mit den im Anspruch 1 angegebenen Merkmalen.

Erfindungsgemäß wurde erkannt, dass eine Kombination aus einer Mehrstöckigkeit, einer Modulbauweise und einer Thermoöl-Heizung zu einem besondere Vorteile bietenden Durchlauf-Backofen für den kontinuierlichen Backbetrieb führt. Je nach den Durchsatzanforderungen können alle Durchlauf-Backräume des Durchlauf-Backofens oder auch nur ausgewählte oder ein Durchlauf-Backraum betrieben werden. Die Modul-Bauweise ermöglicht es, den jeweiligen Durchlauf-Backraum flexibel an jeweils vorliegende Backanforderungen und gegebenenfalls auch an Bauraumanforderungen anzupassen. Eine Thermoöl-Heizeinrichtung lässt sich besonders energieeffizient betreiben. Die Durchlauf-Backräume werden über direkte Strahlungswärme von den Thermoöl-Wärmetauschern beheizt. Die Thermoöl-Wärmetauscher sind dem jeweiligen Durchlauf-Backraum direkt zugeordnet. Ein Ofenmodul des Durchlauf-Backofens kann einen Thermoöl-Wärmetauscher zur Erzeugung von Oberhitze und/oder einen Thermoöl-Wärmetauscher zur Erzeugung von Unterhitze aufweisen. Die Thermoöl-Wärmetauscher können als Rohrwärmetauscher ausgeführt sein. Der Durchlauf-Backofen hat eine Umlufteinrichtung zum Führen von Umluft über mindestens einen Umluftkreislauf durch die Backräume, wobei der mindestens eine Thermoöl-Wärmetauscher Teil des mindestens einen Umluftkreislaufs ist. Mit einer derartigen Umlufteinrichtung lässt sich eine Backraumerwärmung über eine Strahlungsabgabe vom Thermoöl-Wärmetauscher mit den Vorteilen einer konvektiven Wärmeübertragung aufgrund der Umlufteinrichtung kombinieren. Je nach Auslegung des Wärmetauschers und je nach Umluftsteuerung der Umlufteinrichtung kann erfindungsgemäß einer der Wärmeübertragungsmechanismen "Strahlungswärme" oder "Wärmeabgabe an Umluft" dominierend sein. Mit der Umlufteinrichtung kann eine Kreislauf-Luftführung realisiert werden, wobei eine Durchströmung mindestens eines dem jeweiligen Backraum zugeordneten Thermoöl-Wärmetauschers Teil dieser Kreislauf-Luftführung ist. Im jeweiligen Backraum wird aufgrund der Umlufteinrichtung die Luft in Bewegung gesetzt, was zusätzlich zur Strahlungswärme, ausgehend von den Thermoöl-Wärmetauschern, noch einen Energieeintrag auf das Produkt durch den konvektiven Wärmeübertrag erzeugt.

Eine Modulbauweise nach Anspruch 2 ist in der Herstellung besonders kostengünstig.

Eine Ausgestaltung der Ofenmodule und der Umlufteinrichtung nach Anspruch 3 ermöglicht eine flexibel an Backanforderungen angepasste Auslegung der Umlufteinrichtung. Die Aufnahmen für die Lüfter können in gegenüberliegenden Seitenwänden der Ofenmodule angeordnet sein, die sich seitlich der Backräume längs der Backgut-Förderrichtung erstrecken. Nicht alle Ofenmodule müssen mit einem Lüfter der Umlufteinrichtung ausgestattet sein. Es kann ausreichen, wenn beispielsweise lediglich die Hälfte oder sogar ein noch kleinerer Anteil der Ofenmodule einen Lüfter aufweist.

Eine Ausgestaltung nach Anspruch 4 ermöglicht einen besonders flexiblen Betrieb der Umlufteinrichtung. Je nach Backanforderung können zum Beispiel alle oder ausgewählte Lüfter längs des jeweiligen Durchlauf-Backraums in vorgegebener Weise betrieben werden.

Die Lüfter können so betrieben werden, dass im jeweiligen Backraum ein Luftstrom von unten nach oben oder von oben nach unten stattfindet.

Eine Anordnung der Lüfter nach Anspruch 5 bietet Vorteile hinsichtlich einer Versorgung und/oder Wartung der Lüfter.

Eine alternierende Anordnung nach Anspruch 6 ermöglicht eine Vergleichmäßigung eines Backergebnisses über eine gesamte Backraumbreite.

Einige oder alle der Ofenmodule können auch mit zwei Lüftern auf beiden Seiten ausgerichtet sein.

Je nach Anforderung der Lüfter lässt sich über die aufeinanderfolgenden Backräume der Ofenmodule eines der Durchlauf-Backräume eine gleichlaufende Strömungsrichtung durch die Backräume, also jeweils beispielsweise von unten nach oben oder jeweils von oben nach unten erreichen, oder auch eine alternierende Luftströmung, die beim Durchgang des Backguts durch einen Durchlauf-Backraum "von unten nach oben" einmal oder mehrfach wechseln kann zu "von oben nach unten".

Ausführungsbeispiele der Erfindung werden nachfolgend anhand der Zeichnung näher erläutert. In dieser zeigen:
- Fig. 1: eine Seitenansicht eines modular aufgebauten Durchlauf-Backofens;
- Fig. 2: schematisch einen Schnitt gemäß Linie II-II in Fig. 1;
- Fig. 3: stärker im Detail einen Schnitt mit zu Fig. 2 ähnlicher Schnittführung durch ein zwei gegenüberliegende Lüfter einer Umlufteinrichtung aufweisendes Backofen-Modul des Durchlauf-Backofens; und
- Fig. 4 bis 7: Varianten von Anordnungen der Lüfter der Umlufteinrichtung an den Backofen-Modulen eines Durchlauf-Backraums des Durchlauf-Backofens nach Fig. 1.

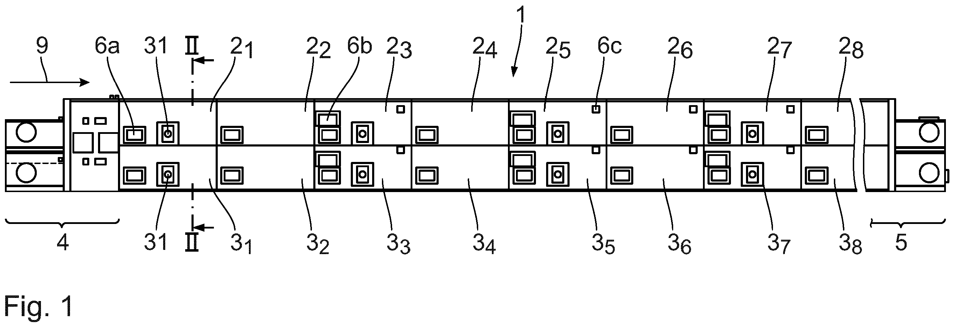

Fig. 1 zeigt eine Gesamt-Seitenansicht eines als Tunnelofen ausgeführten Durchlauf-Backofens 1, mit dem z.B. Dauerbackgebäck in Form von Weichkeksen, Hartkeksen oder Laugengebäck produziert werden können. Auch anderes Backgut, z.B. Toastbrot, kann im Backofen verarbeitet werden. Mit dem Backofen 1 ist auch ein Rösten und als Spezialanwendung auch ein Trocknen oder Sterilisieren möglich. Der Backofen 1 ist in der dargestellten Ausführung unterbrochen dargestellt und hat eine Mehrzahl von Ofenmodulen 2ᵢ, 3ᵢ mit Backräumen, die zusammen zwei übereinanderliegende Durchlauf-Backräume zwischen jeweils einem in Backgut-Förderrichtung führenden Anfangs-Ofenmodul 2₁, 3₁ und jeweils einem in Backgut-Förderrichtung letzten Abschluss-Ofenmodul 2_{N}, 3_{N} (i = 1, ..., N, N: Anzahl der Ofenmodule) bilden. In der Fig. 1 sind insgesamt acht Ofenmodule 2₁ bis 2₈, die zu einem oberen Durchlauf-Backraum gehören, und darunterliegend acht Ofenmodule 3₁ bis 3₈ dargestellt, die zu einem unteren Durchlauf-Backraum des Durchlauf-Backofens 1 gehören. Die Ofenmodule sind beim Durchlauf-Backofen 1 also zweistöckig angeordnet.

Die Ofenmodule 2₁ bis 2₈ sowie 3₁ bis 3₈ haben jeweils den gleichen Grundaufbau, insbesondere was eine Tragrahmengestaltung sowie Aufnahmen für An- und Einbauteile angeht. Insoweit haben die Ofenmodule 2₁ bis 2₈ und 3₁ bis 3₈ die gleichen Abmessungen, haben also, was Höhe, Breite und Tiefe angeht, jeweils grundsätzlich die gleichen Bauraumerfordernisse.

Die Ofenmodule 2₁ bis 2₈ und 3₁ bis 3₈ liegen zunächst als separate Module vor und werden beim Zusammenbau des Backofens 1 miteinander verbunden. In jedem der Backofenmodule 2₁ bis 2₈ und 3₁ bis 3₈ wird über nachfolgend noch beschriebene Wärmetauscher geheizte Umluft jeweils in einem Kreislauf geführt. Die oberen Ofenmodule 2₁ bis 2₈ werden von den unteren Ofenmodulen 3₁ bis 3₈ getragen. Die unteren Ofenmodule 3₁ bis 3₈ werden von einem Maschinenboden getragen.

Vor einem in der Backgut-Förderrichtung jeweils führenden Anfangs-Backofenmodul 2₁ beziehungsweise 3₁ ist in der Förderrichtung ein Beschickungsmodul 4 für das Backgut angeordnet, welches wiederum zweistöckig ausgeführt ist und mit den beiden Durchlauf-Backräumen kommuniziert. Hinter einem in der Backgut-Förderrichtung letzten Abschluss-Ofenmodul 2ᵢ sowie 3ᵢ ist ein Ausgabemodul 5 des Durchlauf-Backofens 1 zum Übernehmen des gebackenen Backguts aus den Durchlauf-Backräumen und zum Ausgeben von diesem angeordnet, welches ebenfalls zweistöckig ausgeführt ist und wiederum mit den beiden Durchlauf-Backräumen kommuniziert. Das Beschickungsmodul 4 einerseits und das Ausgabemodul 5 andererseits schließen den Umluftkreislauf am Anfang und am Ende der Durchlauf-Backräume jeweils ab.

Zwischen den Ofenmodulen 2₈, 3₈ und dem Ausgabemodul 5 ist der Durchlauf-Backofen 1 in der Fig. 1 unterbrochen dargestellt, um anzudeuten, dass die Anzahl der Ofenmodule 2ᵢ, 3ᵢ größer sein kann, als in der Fig. 1 dargestellt. Die Anzahl N der Ofenmodule 2ᵢ, 3ᵢ kann in der Praxis beispielsweise zwischen 5 und 20 variieren.

Zu backendes Backgut tritt über das Beschickungsmodul 4 in den jeweiligen Durchlauf-Backraum 7, 8, also in das jeweils führende Anfangs-Ofenmodul 2₁, 3₁ ein, durchläuft den jeweiligen Durchlauf-Backraum 7, 8 längs der Backgut-Förderrichtung 9 und tritt über das Ausgabemodul 5 nach Durchlaufen der jeweils letzten Abschluss-Ofenmodule 2ᵢ, 3ᵢ aus den Durchlauf-Backräumen 7, 8 fertig gebacken wieder aus.

In der Seitenansicht des Durchlauf-Backofens nach Fig. 1 sind bei einigen oder allen der Ofenmodule 2ᵢ, 3ᵢ zudem vorgesehen jeweils eine Reinigungsöffnung 6a, jeweils eine Inspektionsöffnung 6b und jeweils eine Schwadenöffnung 6c. Über die jeweilige Schadenöffnung 6c ist ein Be- /Entschwaden des jeweiligen Backraums des Ofenmoduls 2ᵢ, 3ᵢ möglich.

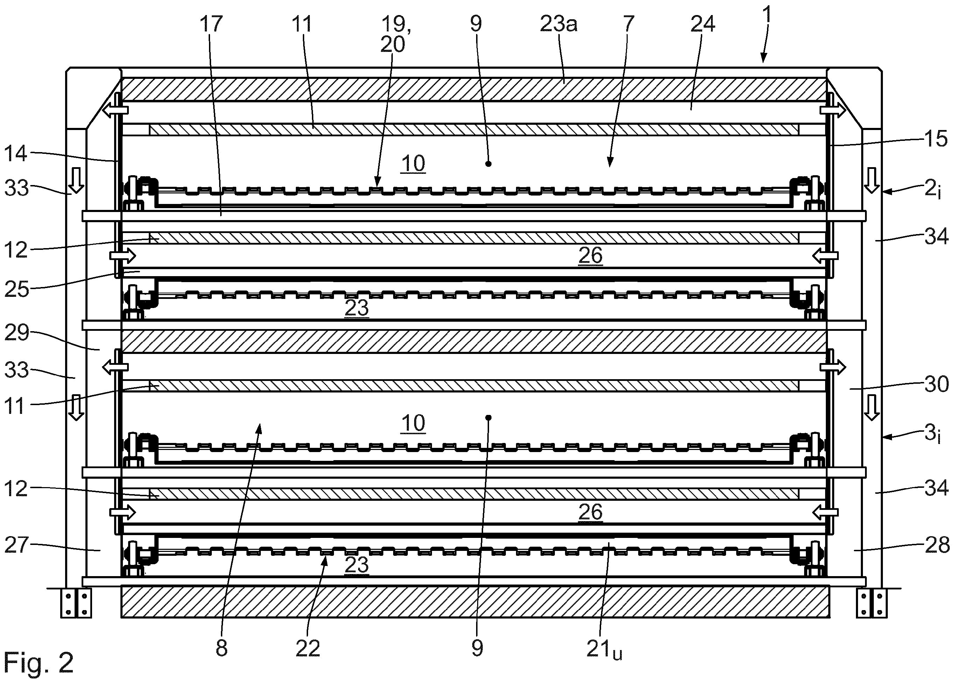

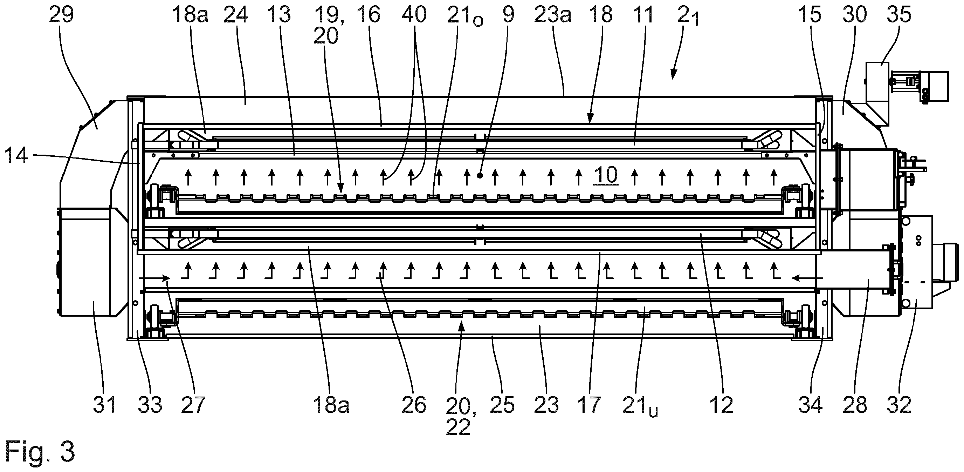

Fig. 2 zeigt einen Schnitt durch zwei übereinanderliegende BackofenModule 2ᵢ, 3ᵢ. Die Förderrichtung 9 steht senkrecht auf der Schnitt- bzw. Zeichenebene der Fig. 2. Fig. 3 zeigt am Beispiel eines der Ofenmodule 2ᵢ dieses stärker im Detail. Die Ofenmodule 3ᵢ sind ebenso aufgebaut, sodass es genügt, in der Detaildarstellung nach Fig. 3 beispielhaft eines der Ofenmodule 2ᵢ zu zeigen. Soweit es um Details geht, die der Fig. 2 nicht zu entnehmen sind, wird insoweit auf die Fig. 3 verwiesen.

Die Backofenmodule 2ᵢ, 3ᵢ haben jeweils einen Backraum 10, der einerseits direkt über die Umluft beheizt wird und andererseits über Strahlungswärme, die erzeugt wird von Wärmetauschern in Form von zwei Schlangen-Rohrwärmetauschern 11, 12. Die Backräume 10 sind jeweils Teil der beiden übereinander angeordneten Durchlauf-Backräume 7, 8, die gebildet werden einerseits von den oberen Ofenmodulen 2ᵢ und andererseits von den unteren Ofenmodulen 3ᵢ. Der oberhalb des jeweiligen Backraums 10 angeordnete Rohrwärmetauscher 11 erzeugt dabei Oberhitze für den Backraum 10. Der unterhalb des Backraums angeordnete Rohrwärmetauscher 12 erzeugt Unterhitze für den Backraum 10.

Als Wärmeträger-Fluid, welches durch die Rohrwärmetauscher 11, 12 fließt, kommt Thermoöl zum Einsatz.

Die beiden Wärmetauscher 11, 12 bilden zusammen mit einer nicht dargestellten Thermoölquelle eine Thermoöl-Heizeinrichtung.

Der obere Rohrwärmetauscher 11 wird von einem Haltegestell 13 getragen, welches an seitlichen Rahmen-Wangen 14, 15 des Backofenmoduls 2ᵢ, 3ᵢ montiert ist. Zusammen mit einer oberen Halteplatte 16 und einer unteren Halteplatte 17 bilden die beiden Rahmen-Wangen 14, 15 ein Backraummodul 18, in dem unter anderem die beiden Rohrwärmetauscher 11, 12 des Backofenmoduls 2ᵢ, 3ᵢ untergebracht sind. Zwischen der oberen Halteplatte 16 und dem oberen Rohrwärmetauscher 11 ist ein Luftführungsblech 18a angeordnet. Letzteres dient einer Vergleichmäßigung einer Umluftströmung im Backraum 10. Das Luftführungsblech 18a kann zudem vom Rohrwärmetauscher 11 Wärmeenergie aufnehmen und diese an die Umluft abgeben, kann also als zusätzliche indirekte Wärmetauscherkomponente dienen. Ein entsprechendes Luftführungsblech 18a ist zwischen dem unteren Rohrwärmetauscher 12 und der unteren Halteplatte 17 angeordnet.

Zwischen den beiden Rohrwärmetauschern 11, 12 läuft ein oberes Fördertrum 19 eines Endlos-Förderbandes 20, welches zum Transport des Backgutes durch den jeweiligen Durchlauf-Backraum 7, 8 zwischen dem Beschickungsmodul 4 und dem Ausgabemodul 5 dient. Der Durchlauf-Backofen 1 hat entsprechend seinem zweistöckigen Aufbau zwei Endlos-Förderbänder 20, nämlich ein oberes Endlos-Förderband 20 für die Backofenmodule 2ᵢ und ein in gleicher Weise aufgebautes unteres Endlos-Förderband 20 für die unteren Ofenmodule 3ᵢ. Es genügt also, eines dieser Förderbänder nachfolgend zu beschreiben.

Das Förderband 20 hat eine Mehrzahl von Bandgliedern 21, von denen in der Fig. 2 ein oberes Bandglied 21ₒ und ein unteres Bandglied 21ᵤ zu sehen ist. Das obere Bandglied 21ₒ ist in seiner aktuellen Betriebsstellung Teil des oberen Fördertrums 19 und ist im Backraum 10 angeordnet. Das untere Bandglied 21ᵤ ist Teil eines unteren Bandtrums 22, welches unterhalb des Backraums 10 und des unteren Rohrwärmetauschers 11 durch einen Rücklauf-Förderbandraum 23 entgegen der Förderrichtung 9 als Teil des Endlos-Förderbandes 20 läuft.

Zwischen der oberen Halteplatte 16 des Backraummoduls 18 und einer oberen Modulplatte 23a des Backofenmoduls 2ᵢ, 3ᵢ ist ein oberer Umluftkanal 24 angeordnet. Zwischen der unteren Halteplatte 17 des Backraummoduls 18 und einer unteren Modulplatte 25 ist ein unterer Umluftkanal 26 angeordnet. Die beiden Umluftkanäle 24, 26 erstrecken sich über die gesamte Breite des Backofenmoduls 2ᵢ, 3ᵢ.

Über Zu- und Abluftkanäle 27, 28, 29, 30 stehen die beiden Umluftkanäle 24, 26 mit zwei gegebenenfalls vorhandenen Axial-/Radiallüftern 31, 32 (vgl. Fig. 3) in Fluidverbindung. Insgesamt ergibt sich so jeweils ein Umluft-Kreislauf des jeweiligen Ofenmoduls 2ᵢ, 3ᵢ. Der Backraum 10 des jeweiligen Ofenmoduls 2ᵢ, 3ᵢ ist Teil dieses Umluftkreislaufes. Die Lüfter 31 beziehungsweise 32 sind zusammen mit dem jeweiligen Umluftkreislauf Bestandteile einer Umlufteinrichtung des Durchlauf-Backofens 1.

Die beiden Lüfter 31, 32 sowie die Zuluft- und Abluftkanäle 27 bis 30 sind, soweit vorhanden, an seitlichen, vertikal verlaufenden Rahmenplatten 33, 34 des Backofenmoduls 2ᵢ, 3ᵢ montiert.

Je nach Ausführung des Durchlauf-Backofens 1 und je nach Anordnung des jeweiligen Ofenmoduls 2ᵢ, 3ᵢ längs des jeweiligen Durchlauf-Backraums 7, 8 hat das jeweils betrachtete Ofenmodul 2ᵢ, 3ᵢ genau zwei Axial-/Radiallüfter 31, 32, die einander gegenüberliegend in entsprechenden Aufnahmen der seitlichen Rahmenplatten 33, 34 montiert sind. Bei anderen Ausführungen der Ofenmodule 2ᵢ, 3ᵢ liegt nur genau einer der Lüfter 31 oder 32 vor und anstelle des anderen, dann nicht vorhandenen Lüfters ist die hierfür vorgesehene Aufnahme durch eine Blindplatte verschlossen. Bei wiederum einer anderen Variante des Ofenmoduls 2ᵢ sind beide gegenüberliegenden Aufnahmen mit jeweiligen Blindplatten versehen, sodass diese Variante der Ofenmodule 2ᵢ, 3ᵢ über keinen eigenen Lüfter verfügt entsprechend der Darstellung in der Fig. 2. Soweit am jeweiligen Ofenmodul 2ᵢ, 3ᵢ kein Lüfter 31 beziehungsweise 32 vorgesehen ist, stehen die Zuluft-/Abluftkanäle 27, 29 einerseits beziehungsweise 28, 30 andererseits zur Bildung des jeweiligen Umluftkreislaufes direkt miteinander über Überströmverbindungen 33, 34 in Fluidverbindung.

Beim Backen mit dem Tunnel-Durchlauf-Backofen 1 wird das auf dem Fördertrum 19 durch die Ofenmodule 2ᵢ bis 3ᵢ hindurchgeführte Backgut einerseits durch Strahlungswärme von den Rohrwärmetauschern 11, 12, die in den jeweiligen Ofenmodulen 2ᵢ, 3ᵢ untergebracht sind, und andererseits über die Umluft, die durch den jeweiligen Backraum 10 des Ofenmoduls 2ᵢ bis 3ᵢ strömt, erwärmt. Die Wärmebeiträge "Strahlungswärme" einerseits und "Umluftwärme" (Wärmeabgabe an durchströmendes Fluid) andererseits können durch entsprechende Auslegung der Rohrwärmetauscher 11, 12 sowie durch die Temperatur und den Fluss eines Wärmeträger-Fluids durch die Rohrwärmetauscher 11, 12 und anderseits durch die durch die Backräume 10 jeweils strömende Luftmenge vorgegeben werden.

Eine Luftströmung durch den jeweiligen Backraum 10 (vgl. z.B. die Luftströmung 40 in der Fig. 3) kann je nach Auslegung des Ofenmoduls 2ᵢ bis 3ᵢ von unten nach oben oder auch von oben nach unten gerichtet sein. Soweit die Luftströmung nicht von den Lüftern 31, 32, sondern von Konvektion erzeugt wird, ist die Luftströmung durch den jeweiligen Backraum 10 von unten nach oben gerichtet.

Beim Strömungsbeispiel nach Fig. 3 sorgt der in der Fig. 3 linke Lüfter 31 dafür, dass die Umluft durch den Zuluftkanal 27 zunächst in den unteren Umluftkanal 26 einströmt. Gleichzeitig sorgt der in der Fig. 3 rechte Lüfter 32 dafür, dass die Umluft durch den rechten Zuluftkanal 28 in den unteren Umluftkanal 26 einströmt. Bedingt durch den im unteren Umluftkanal 26 dann entstehenden Überdruck strömt die Umluft aus dem unteren Umluftkanal 26 nach oben und zwischen benachbarten Rohrabschnitten des unteren Rohrwärmetauschers 12 hindurch. Anschließend durchströmt die Umluft das obere Fördertrum 19 des Endlos-Förderbandes 20 und umströmt dann die hierauf geförderten Teiglinge durch den Backraum 10. Die Umluft durchströmt dann die Durchgänge zwischen Rohrabschnitten des oberen Rohrwärmetauschers 11 und strömt dann in den oberen Umluftkanal 24, von wo aus die Umluft dann über die Lüfter 31, 32 und die Abluftkanäle 29, 30 zur Vervollständigung des jeweiligen Umluftkreislaufes wieder abgesaugt wird. Ein Überdruck im Umluftkreislauf kann über ein klappengesteuertes Abgasrohr 35 (vgl. Fig. 3) entweichen.

Alternativ oder zusätzlich kann die Strömungsrichtung der Umluft durch den Backraum 10 durch entsprechende Ansteuerung des jeweiligen Lüfters 31, 32 von unten nach oben oder von oben nach unten vorgegeben werden.

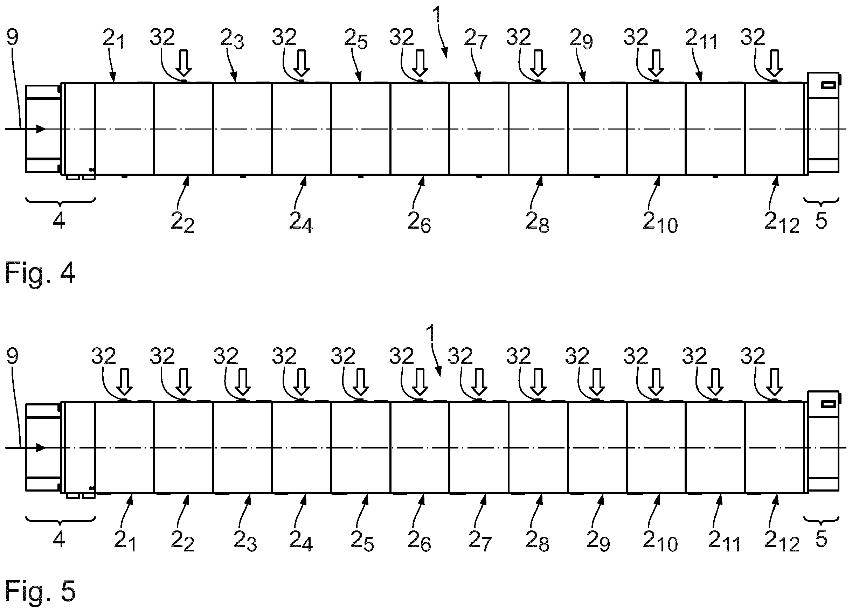

Die Fig. 4 bis 7 zeigen Beispiele entsprechender Anordnungen der Lüfter 31, 32. Diese Anordnungen sind beispielhaft für eine Ausführung des Durchlauf-Backofens 1 mit zwölf Ofenmodulen 2₁ bis 2₁₂, 3₁, 3₁₂ gezeigt. Sichtbar sind in den Fig. 4 bis 7 jeweils die oberen Ofenmodule 2₁ bis 2₁₂, für die auch die Lüfter-Varianten nachfolgend beschrieben werden.

Fig. 4 zeigt eine Anordnung, bei der gesehen in der Förderrichtung 9 Lüfter 32 über jeweils an einer Seite der Ofenmodule 2ᵢ angeordnet sind, im dargestellten Ausführungsbeispiel Lüfter 32 an jeweils der, gesehen in Förderrichtung 9 linken Seite der Backräume 10 der Ofenmodule 2ᵢ. Die Lüfter 32 sind an jedem zweiten der Ofenmodule 2₂, 2₄, 2₆, 2₈, 2₁₀ und 2₁₂ angeordnet. Die anderen, in der Anordnungsreihenfolge in der Förderrichtung ungeradzahligen Ofenmodule weisen keinen Lüfter 31/32 auf.

Alternativ zur Ausführung nach Fig. 4 können auch zwei oder noch mehr hintereinanderliegende Ofenmodule 2ᵢ/3ᵢ keinen Lüfter aufweisen.

Fig. 5 zeigt eine Variante der einseitigen Anordnung wiederum am Beispiel der einseitigen Anordnung wiederum am Beispiel der Anordnung der Lüfter 32, bei der alle Ofenmodule 2ᵢ jeweils mit genau einem Lüfter 32 ausgerüstet sind.

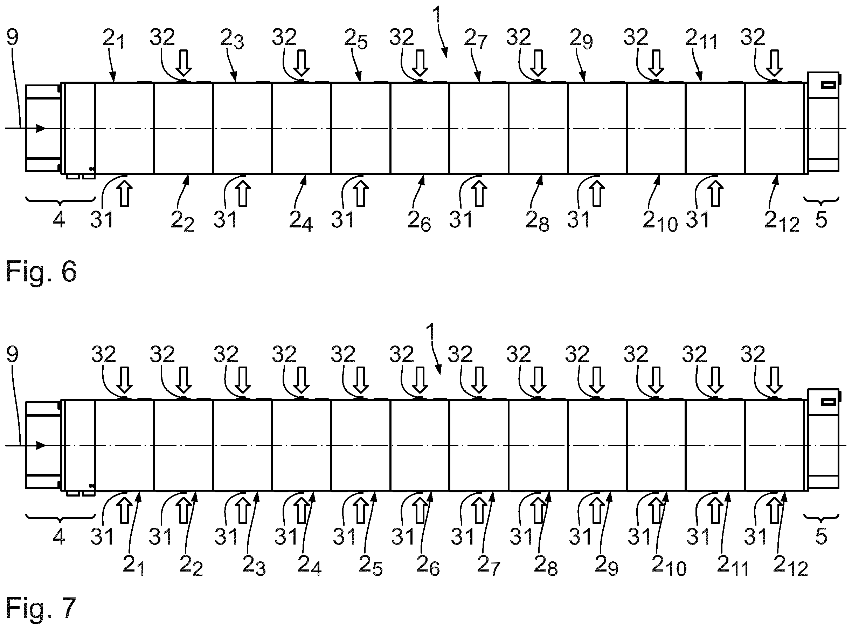

Fig. 6 zeigt eine Anordnung, bei der die Lüfter 31, 32 alternierend auf der einen und auf der anderen Seite der Backräume der Ofenmodule 2ᵢ angeordnet sind. Jedes zweite Ofenmodul 2ᵢ hat also einen Lüfter 31, angeordnet in Backrichtung 9 jeweils auf der rechten Seite der Backräume 10 und die anderen Ofenmodule 2ᵢ haben einen gegenüberliegend angeordneten Lüfter 32.

Eine alternierende Lüfteranordnung entsprechend derjenigen nach Fig. 6 kann auch so gestaltet sein, dass mehrere hintereinanderliegende Ofenmodule 2ᵢ/3ᵢ die Lüfter auf der gleichen Seite aufweisen und beispielsweise nach zwei oder mehr derartigen Ofenmodulen 2ᵢ/3ᵢ ein Wechsel einer Anordnungsseite der Lüfter hin zur anderen Seite erfolgt.

Bei der Lüfteranordnung nach Fig. 7 weist jedes der Ofenmodule 2ᵢ zwei gegenüberliegende Lüfter 31, 32 auf.

Der Durchlauf-Backofen 1 ist für den kontinuierlichen Backbetrieb ausgeführt. Es ist also möglich, das Backgut in einem kontinuierlichen Fluss zwischen dem Beschickungsmodul 4 und dem Ausgabemodul 5 zu backen. Je nach benötigter Backgut-Durchsatzmenge können dabei beide Durchlauf-Backräume 7, 8 oder es kann auch wahlweise nur einer der beiden Durchlauf-Backräume 7 oder 8 genutzt werden. Entsprechend dem kontinuierlichen Durchlauf durch die Durchlauf-Backräume 7, 8 findet eine kontinuierliche Beschickung der Durchlauf-Backräume 7, 8 mit dem Beschickungsmodul 4 und eine kontinuierliche Ausgabe aus den Durchlauf-Backräumen 7, 9 über das Ausgabemodul 5 statt.

In den Ofenmodulen 2ᵢ/3ᵢ können verschiedene Temperaturzonen vorgegeben werden. Dies kann durch Vorgabe der Temperatur und/oder der Durchflussmenge des Thermoöls und/oder der Umluftmenge sowie der Umluftrichtung von unten nach oben/von oben nach unten vorgegeben werden. Hierfür dient eine zentrale Steuereinrichtung des Backofens 1. Über diese zentrale Steuereinrichtung kann auch eine Auswahl der anzusteuernden Lüfter erfolgen. Die vorstehend im Zusammenhang mit den Fig. 4 bis 6 beschriebenen Lüfter-Anordnungen können durch auch entsprechende Auswahl aktiver Lüfter bei der Komplett-Bestückung nach Fig. 7 realisiert werden. Je nach den Backanforderungen kann dann durch eine entsprechend verringerte Anzahl aktiver Lüfter ein gezieltes Backen mit geringerem Konvektionsbeitrag erfolgen. Über die zentrale Steuereinrichtung kann auch eine Fördereinrichtung der Thermoöl-Heizeinrichtung, die nicht dargestellt ist, angesteuert werden.

## Patentansprüche

1. Durchlauf-Backofen (1) für den kontinuierlichen Backbetrieb,
- mit mindestens zwei Durchlauf-Backräumen (7, 8),
- mit einer Mehrzahl von Ofenmodulen (2ᵢ, 3ᵢ) mit Backräumen (10) die zusammen die Durchlauf-Backräume (7, 8) zwischen jeweils einem in Backgut-Förderrichtung (9) führenden Anfangs-Ofenmodul (2₁, 3₁) und jeweils einem in der Backgut-Förderrichtung (9) letzten Abschluss-Ofenmodul (2_{N}, 3_{N}) bilden,
- wobei die Ofenmodule (2ᵢ, 3ᵢ) derart mehrstöckig angeordnet sind, dass hierüber die mindestens zwei übereinanderliegenden Durchlauf-Backräume (7, 8) der Ofenmodule (2₁, 3₁) vorgegeben sind,
- mit einer Backgut-Fördereinrichtung (20) zum kontinuierlichen Fördern von Backgut zwischen dem jeweiligen Anfangs-Ofenmodul (2₁, 3₁) und dem jeweiligen Abschluss-Ofenmodul (2_{N}, 3_{N}) eines der Durchlauf-Backräume (7, 8), **gekennzeichnet durch** eine Z
- Thermoöl-Heizeinrichtung, aufweisend mindestens einen Thermoöl-Wärmetauscher (11, 12), zum Beheizen der Durchlauf-Backräume (7, 8) über Strahlungswärme,
- wobei die Durchlauf-Backräume (7, 8) über direkte Strahlungswärme von den Thermoöl-Wärmetauschern (11, 12) beheizt werden,
- wobei ein Ofenmodul (2₁, 3₁) des Durchlauf-Backofens (1) einen Thermoöl-Wärmetauscher (11, 12) zur Erzeugung von Oberhitze und/oder einen Thermoöl-Wärmetauscher (11, 12) zur Erzeugung von Unterhitze aufweist,
- mit einer Umlufteinrichtung zum Führen von Umluft über mindestens einen Umluftkreislauf durch die Backräume (10), wobei der mindestens eine Thermoöl-Wärmetauscher (11, 12) Teil des mindestens einen Umluftkreislaufs ist,
- wobei die Umlufteinrichtung derart ausgebildet ist, dass je nach Auslegung des Wärmetauschers und je nach Umluftsteuerung der Umlufteinrichtung dann einer der Wärmeübertragungsmechanismen "Strahlungswärme" oder "Wärmeabgabe an Umluft" dominierend sein kann.

2. Backofen nach Anspruch 1, **dadurch gekennzeichnet, dass** zumindest einige der Ofenmodule (2ᵢ, 3ᵢ) einen gleichen Grundaufbau aufweisen.

3. Backofen nach Anspruch 2, **dadurch gekennzeichnet, dass** zumindest einige der Ofenmodule (2ᵢ, 3ᵢ) jeweils mindestens zwei Aufnahmen für jeweils einen Lüfter (31; 32) zum Umwälzen der Umluft aufweisen, wobei der jeweilige Backraum (10) des Ofenmoduls (2ᵢ, 3ᵢ) zwischen den Aufnahmen angeordnet ist, wobei die Umlufteinrichtung eine Anordnung von Lüftern (31, 32), die zum Umwälzen der Umluft dienen, derart aufweist, dass mindestens einige der Backofenmodule (2ᵢ, 3ᵢ) jeweils mit mindestens einem Lüfter (31, 32) ausgerüstet sind.

4. Backofen nach Anspruch 3, **dadurch gekennzeichnet, dass** die Umlufteinrichtung eine Anordnung der Lüfter (31, 32) derart aufweist, dass alle der Ofenmodule (2ᵢ, 3ᵢ) eines Durchlauf-Backraums (7, 8) mit mindestens einem Lüfter (31, 32) ausgerüstet sind.

5. Backofen nach Anspruch 3 oder 4, **dadurch gekennzeichnet, dass** die Umlufteinrichtung eine Anordnung der Lüfter (31, 32) derart aufweist, dass die Lüfter (31, 32) auf der gleichen Seite der Backräume (10) der Ofenmodule (2ᵢ, 3ᵢ) eines der Durchlauf-Backräume (7, 8) angeordnet sind.

6. Backofen nach einem der Ansprüche 3 oder 4, **dadurch gekennzeichnet, dass** die Umlufteinrichtung eine Anordnung der Lüfter (31, 32) derart aufweist, dass die Lüfter (31, 32) alternierend auf der einen Seite und auf der anderen Seite der Backräume (10) der Ofenmodule (2ᵢ, 3ᵢ) eines der Durchlauf-Backräume (7, 8) angeordnet sind.

## Claims

1. Conveyor baking oven (1) for the continuous baking operation,
- with at least two conveyor baking spaces (7, 8),
- with a plurality of oven modules (2ᵢ, 3ᵢ) with baking spaces (10), which combine to form the conveyor baking spaces (7, 8) between a respective initial oven module (2₁, 3₁) arranged in a leading manner when seen in the bakery product conveying direction (9), and a respective final oven module (2_{N}, 3_{N}), which is the last in row when seen in the bakery product conveying direction (9),
- wherein the oven modules (2ᵢ, 3ᵢ) have a multi-level arrangement such as to define the at least two conveyor baking spaces (7, 8) of the oven modules (2₁, 3₁), arranged on top of one another,
- with a bakery product conveyor device (20) configured to continuously convey bakery products between the respective initial oven module (2₁, 3₁) and the respective final oven module (2_{N}, 3_{N}) of one of the conveyor baking spaces (7, 8),
**characterized by** a
- thermal oil heating device having at least one thermal oil heat exchanger (11, 12) configured to heat the conveyor baking spaces (7, 8) by means of radiant heat,
- wherein the conveyor baking spaces (7, 8) are heated via direct radiant heat from the thermal oil heat exchangers (11, 12),
- wherein an oven module (2₁, 3₁) of the conveyor baking oven (1) has a thermal oil heat exchanger (11, 12) for generating top heat and/or a thermal oil heat exchanger (11, 12) for generating bottom heat,
- with a convection device for guiding circulating air via at least one circulating air cycle through the baking spaces (10), wherein the at least one thermal oil heat exchanger (11, 12) is part of the at least one circulating air cycle,
- wherein the convection device is designed such that, depending on the design of the heat exchanger and depending on the circulating air control of the convection device, one of the heat transfer mechanisms "radiant heat" or "heat dissipation to circulating air" may then be dominant.

2. Baking oven according to claim 1, **characterized in that** at least some of the oven modules (2ᵢ, 3ᵢ) have the same basic design.

3. Baking oven according to claim 2, **characterized in that** at least some of the oven modules (2ᵢ, 3ᵢ) each have at least two receptacles for in each case one fan (31; 32) configured to circulate the circulating air, with the respective baking space (10) of the oven module (2ᵢ, 3ᵢ) being arranged between the receptacles, with the convection device having an arrangement of fans (31, 32), used to circulate the circulating air, such that at least some of the baking oven modules (2ᵢ, 3ᵢ) are each equipped with at least one fan (31, 32).

4. Baking oven according to claim 3, **characterized in that** the convection device has an arrangement of the fans (31, 32) such that all of the oven modules (2ᵢ, 3ᵢ) of a conveyor baking space (7, 8) are equipped with at least one fan (31, 32).

5. Baking oven according to claim 3 or 4, **characterized in that** the convection device has an arrangement of the fans (31, 32) such that the fans (31, 32) are arranged on the same side of the baking spaces (10) of the oven modules (2ᵢ, 3ᵢ) of one of the conveyor baking spaces (7, 8).

6. Baking oven according to any one of claims 3 or 4, **characterized in that** the convection device has an arrangement of the fans (31, 32) such that the fans (31, 32) are alternatingly arranged on one side and on the other side of the baking spaces (10) of the oven modules (2ᵢ, 3ᵢ) of one of the conveyor baking spaces (7, 8).

## Revendications

1. Four à cuisson à passage continu (1) pour une opération de cuisson continue,
- avec au moins deux espaces de cuisson à passage continu (7, 8),
- avec une pluralité de modules de four (2ᵢ, 3ᵢ) avec des espaces de cuisson (10) qui forment ensemble les espaces de cuisson à passage continu (7, 8) entre respectivement un module de four initial (2₁, 3₁) en tête dans la direction de transport (9) du matériau de cuisson et respectivement un module de four final (2_{N}, 3_{N}) dans la direction de transport (9) du matériau de cuisson,
- dans laquelle les modules de four (2ᵢ, 3ᵢ) sont disposés sur plusieurs niveaux de manière à prédéterminer les au moins deux espaces de cuisson à passage continu (7, 8) des modules de four (2₁, 3₁), qui sont situés l'un au-dessus de l'autre,
- avec un dispositif de transport de matériau de cuisson (20) pour transporter en continu le matériau de cuisson entre le module de four initial respectif (2₁, 3₁) et le module de four final respectif (2_{N}, 3_{N}) de l'un des espaces de cuisson à passage continu (7, 8),
**caractérisé par** un
- dispositif de chauffage à l'huile thermique, ayant au moins un échangeur de chaleur à l'huile thermique (11, 12), pour chauffer les espaces de cuisson à passage continu (7, 8) au moyen de la chaleur radiante,
- dans lequel les espaces de cuisson à passage continu (7, 8) sont chauffés par de la chaleur radiante directe des échangeurs de chaleur à l'huile thermique (11, 12),
- dans lequel un module de four (2₁, 3₁) du four à cuisson à passage continu (1) a un échangeur de chaleur à l'huile thermique (11, 12) pour générer de la chaleur supérieure et/ou un échangeur de chaleur à l'huile thermique (11, 12) pour générer de la chaleur inférieure,
- avec un dispositif de circulation d'air pour guider l'air en circulation via au moins un circuit d'air en circulation à travers les espaces de cuisson (10), dans lequel l'au moins un échangeur de chaleur à l'huile thermique (11, 12) fait partie de l'au moins un circuit d'air en circulation,
- dans lequel le dispositif de circulation d'air est conçu de sorte que, en fonction de la conception de l'échangeur de chaleur et en fonction de la commande de circulation d'air du dispositif de circulation d'air, l'un des mécanismes de transfert de chaleur "chaleur radiante" ou "dissipation de chaleur vers l'air en circulation" peut alors être dominant.

2. Four à cuisson selon la revendication 1, **caractérisé en ce qu'**au moins certains des modules de four (2ᵢ, 3ᵢ) ont une même structure de base.

3. Four à cuisson selon la revendication 2, **caractérisé en ce qu'**au moins certains des modules de four (2ᵢ, 3ᵢ) ont au moins deux logements chacun pour respectivement un ventilateur (31 ; 32) pour la circulation de l'air en circulation, dans laquelle l'espace de cuisson (10) respectif du module de four (2ᵢ, 3ᵢ) est disposée entre les logements, dans laquelle le dispositif de circulation d'air présente un agencement de ventilateurs (31, 32) qui servent à faire circuler l'air en circulation, de sorte qu'au moins certains des modules de four à cuisson (2ᵢ, 3ᵢ) sont équipés chacun d'au moins un ventilateur (31, 32).

4. Four à cuisson selon la revendication 3, **caractérisé en ce que** le dispositif de circulation d'air présente un agencement des ventilateurs (31, 32) de sorte que tous les modules de four (2ᵢ, 3ᵢ) d'un espace de cuisson à passage continu (7, 8) sont équipés d'au moins un ventilateur (31, 32).

5. Four à cuisson selon la revendication 3 ou 4, **caractérisé en ce que** le dispositif de circulation d'air présente un agencement des ventilateurs (31, 32) de sorte que les ventilateurs (31, 32) sont disposés du même côté des espaces de cuisson (10) des modules de four (2ᵢ, 3ᵢ) de l'un des espaces de cuisson à passage continu (7, 8).

6. Four à cuisson selon l'une quelconque des revendications 3 ou 4, **caractérisé en ce que** le dispositif de circulation d'air présente un agencement des ventilateurs (31, 32) de sorte que les ventilateurs (31, 32) sont disposés de manière alternée d'un côté et de l'autre des espaces de cuisson (10) des modules de four (2ᵢ, 3ᵢ) de l'une des espaces de cuisson à passage continu (7, 8).
